(19) **Europäisches Patentamt**

**European Patent Office**

**Office européen des brevets**

(11) Veröffentlichungsnummer: **0 422 312 B1**

(12) **EUROPÄISCHE PATENTSCHRIFT**

(45) Veröffentlichungstag der Patentschrift: **04.01.95**

(21) Anmeldenummer: **89810760.2**

(22) Anmeldetag: **09.10.89**

(51) Int. Cl.⁶: **A22B 3/00**

(54) **Verfahren und Vorrichtung zum Betäuben von Schlachttieren.**

(43) Veröffentlichungstag der Anmeldung:
**17.04.91 Patentblatt 91/16**

(45) Bekanntmachung des Hinweises auf die Patenterteilung:
**04.01.95 Patentblatt 95/01**

(84) Benannte Vertragsstaaten:
**AT BE CH DE ES FR GB IT LI NL SE**

(56) Entgegenhaltungen:
**GB-A- 2 079 125**
**US-A- 4 503 585**

(73) Patentinhaber: **ROLL AND GO AG**
**Seerosenstrasse 32**
**CH-6362 Stansstad (CH)**

(72) Erfinder: **Howard, Johannes**
**Bollingenstrasse 46**
**CH-3006 Bern (CH)**
Erfinder: **Fuchs, Lucie**
**Rustica**
**CH-8452 Adlikon (CH)**

(74) Vertreter: **Frei, Alexandra Sarah**
**Frei Patentanwaltsbüro**
**Hedwigsteig 6**
**Postfach 95**
**CH-8029 Zürich (CH)**

## Beschreibung

Die Erfindung bezieht sich auf ein Verfahren und eine Vorrichtung zum Betäuben von Schlachttieren gemäss dem Oberbegriff des Patentanspruchs 1 bzw. 14.

In modernen, industrialisierten Schlachtbetrieben werden die Schlachttiere vor dem Schlachten bzw. dem Blutentzug betäubt. Eine tierschutzgerechte und fleischhygienisch gute Betäubungsmethode im Hinblick auf die Tötung des Tieres soll das Tier möglichst schnell und nachhaltig in einen Zustand überführen, in welchem Bewusstsein sowie Schmerzempfindung ausgelöscht sind.

In der Vergangenheit wurden verschiedenste Verfahren zum Betäuben von Schlachttieren angewandt. Weite Verbreitung haben die elektrische, die Kohlendioxid und auch die Bolzenschussbetäubung gefunden. In neuerer Zeit wurden auch Betäubungsverfahren bekannt, bei denen die Schlachttiere einem bestimmten Luftunterdruck ausgesetzt wurden, wodurch eine Betäubung oder der Tod eintrat.

Alle Betäubungsarten üben einen negativen Effekt auf die Fleischqualität aus. Bei der Betäubung durch Stromstösse wird der PSE- (pale, soft, exsudativ) oder DFD- (dark, firm, dry) Fleischanteil erhöht. Zudem treten oft Knochenbrüche und Muskelblutungen auf. Höhere Voltzahlen bei der elektrischen Betäubung scheinen ausserdem die Tendenz zu Krämpfen zu verstarken. Vor allem Blutungen, insbesondere Schulterblutungen, führen zu wirtschaftlichen Verlusten.

Die Kohlendioxidbetäubung verursacht zwar keine Muskelblutungen, petechiale Blutungen und Knochenbrüche, doch wird die Fleischqualität in der Regel bemängelt. So sind z.B. im Vergleich zu anderen Betäubungsverfahren die Katecholaminwerte im Blut am höchsten. Werden z.B. halothanpositive Schweine (Anteil in der BRD bis 60%, in der Schweiz unter 10%) mit Kohlendioxid betäubt, so ist die Fleischqualität nicht akzeptabel und der Anteil an PSE-Fleisch massiv erhöht. Sowohl die Kohlendioxidbetäubung als auch die erwähnte Betäubungsmethode durch Unterdruck führen bei den Tieren Erregungsphasen von mehreren Sekunden herbei, bevor die Betäubung eintritt.

Gegen das Ende des letzten Jahrhunderts wurden die ersten schädeldurchdringenden Betäubungsinstrumente eingeführt, welche auf dem Prinzip der direkten Hirntraumatisierung basieren. Wesentliche Nachteile älterer Instrumente wurden durch die Entwicklung eines ersten Bolzenschussapparates in den Jahren 1914-1920 beseitigt. Jenes Funktionsprinzip wird mit einigen wenigen Modifikationen bis heute beibehalten. Ein Bolzen wird durch eine Treibladung mit hoher Geschwindigkeit ungefähr zehn Zentimeter tief in den Schädel getrieben und dann zurückgezogen. Der Bolzen verlässt somit den Schussapparat nicht. Des weiteren wurden in neuerer Zeit Bolzenschussapparate bekannt, die mit Druckluft angetrieben werden. Bei diesen tritt zusätzlich Luft in die Hirnmasse, was den Traumatisierungseffekt verstärkt. Diese Apparate weisen derart massive Probleme auf, dass sie in der Praxis nicht angewendet werden können. Insbesondere ist die Wirkenergie zu gering, so dass die Betäubungswirkung zu gering ist und vielfach Nachschüsse notwendig sind. Ausserdem treten Blutungen in Lunge, Herz und Leber auf.

Daneben ist als weitere schädeldurchdringende Betäubungsmethode die Schuss-Schlagbetäubung bekannt, die ähnliche Nachteile wie die Bolzenschuss-Betäubung sowie weitere Unzulänglichkeiten aufweist. In der Schweiz ist diese Betäubungsmethode bspw. nicht zugelassen.

Aus der US-A-4,503,585 ist ein Verfahren und eine Vorrichtung zum Betäuben von Schlachttieren bekannt. Dabei wird zuerst mit einem Bolzen ein Loch in den Schädel des Schlachttieres geschlagen und anschliessend Druckluft durch den Bolzen hindurch in das Gehirn eingeführt. Nachteilig ist dabei der Umstand, dass damit keine rasche, nachhaltige und tierfreundliche Betäubung erfolgt. Da die Druckluft zuerst den Bolzen antreibt, wird ein grosser Teil seiner Energie für das Beschleunigen des Bolzens verwendet. Die anschliessend durch den Bolzen hindurch eingepresste und dabei gedrosselte Druckluft betäubt das Tier relativ schleppend.

Ein wesentlicher Nachteil der Bolzenschussapparate für den industriellen Einsatz liegt darin, dass nur eine beschränkte Anzahl Tiere pro Zeiteinheit geschossen werden können. Deshalb wird diese Methode nur noch beim Grossvieh verwendet. Bei Schweinen werden Bolzenschussapparate grundsätzlich nur bei Hausschlachtungen eingesetzt. Die Bolzenschussbetäubung führt zudem zu einem vermehrten Anteil von hellem und wässrigem Fleisch. Problematisch ist die Bolzenschussmethode auch deshalb, weil die Schlachttiere, insbesondere Schweine, ein schreckhaftes Verhalten aufweisen. Das Zielen und die Treffsicherheit ist dadurch erschwert, was eine unzuverlässige Betäubung zur Folge hat.

Alle herkömmlichen Betäubungsverfahren weisen wesentliche Nachteile und Kompromisse auf.

Es ist Aufgabe der Erfindung, ein Verfahren und eine Vorrichtung derart zu schaffen, dass die Schlachttiere so rasch und nachhaltig betäubt sind, dass sie den Betäubungsvorgang selbst nicht mehr wahrnehmen und dass die Fleischqualität nicht negativ beeinflusst wird, wobei die Methode wirtschaftlich, vollautomatisch und mit einer kurzen Repetionszeit anwendbar sein und keine Gefahrenquelle für das Betriebspersonal darstellen soll. Es ist des weiteren Aufgabe der Erfindung, ein Verfahren und eine Vorrichtung zu schaffen, die eine Betäubung von sowohl grossen als auch kleinen Schlachttieren erlaubt.

Diese Aufgabe wird durch die im kennzeichnenden Teil des Patentanspruchs 1 bzw. 14 genannten Merkmale gelöst.

Anhand der nachfolgenden Figuren ist das erfindungsgemässe Verfahren sowie ein Ausführungsbeispiel der Vorrichtung näher erläutert.

Fig. 1    zeigt ein Prinzipschema eines Ausführungsbeispiels der erfindungsgemässen Vorrichtung.

Fig. 2    zeigt ein Ausführungsbeispiel für die Ansteuerung der Injektionsdüse.

Fig. 3    zeigt ein Ausführungsbeispiel der erfindungsgemässen Vorrichtung mit einer Beimisch- und Dosiereinrichtung.

Die Erfindungsidee geht davon aus, dem Tier ein flüssiges oder gasförmiges Medium in den Schädel zu injizieren. Ziel ist es, unter anderem den Druck innerhalb des Schädels derart stark zu erhöhen, dass die Reticulärformation, die Basalganglien und Thalamus/Hypothalamus ausser Funktion gesetzt werden. Die Erfindung verlässt damit vollständig das bisherige Konzept, einen festen Körper in die Schädeldecke einzuschiessen. Insbesondere soll auch erreicht werden, dass das Tier durch die Methode schlagartig und vollständig relaxiert wird.

Das Verfahren wird im folgenden anhand des Mediums *Wasser* beschrieben. Es ist zu beachten, dass andere flüssige oder gasförmige Stoffe in analoger Weise eingesetzt werden, wobei allfällige spezifische Eigenschaften dieser Stoffe beim Verfahren oder für die Ausbildung der Vorrichtung berücksichtigt werden müssen.

Ausgehend von diesem Grundprinzip soll das Verfahren möglichst einfach und mit grosser Sicherheit angewandt werden können. Den Besonderheiten, die das industrielle Betäuben und Entblutung mit sich bringt, muss dabei besonders Rechnung getragen werden. Insbesondere wird verlangt, dass die Apparatur möglichst einfach ist und eine vorgängige Behandlung des Schädels bzw. der Schädeldecke vermieden wird. Versuche zeigten, dass es tatsächlich möglich ist, mit einem solchen Einspritzen die Haut und Schädeldecke zu penetrieren und den gewünschten Effekt innerhalb des Schädels gezielt hervorzurufen.

Unter hohem Druck wird das Medium, im vorliegenden Beispiel Wasser, im Bereich des Neurocraniums in den Schädel eingespritzt. Unter nachfolgend noch näher spezifizierten Bedingungen (Arbeitsdruck, Zeitdauer, Einspritzmedium) kann erreicht werden, dass die Einspritzstelle praktisch an einer beliebigen Stelle in diesem Bereich erfolgen kann. Die massgeblichen Teile des Hirns werden dabei zerstört bzw. deformiert. Der Eindringungsort des Strahls ist für das Verfahren nicht von primärer Bedeutung. Eine bevorzugte Einspritz-Stelle liegt bspw. um das Zentrum auf der Medianen.

Gegenüber herkömmlichen Methoden wird eine zuverlässigere Betäubung ermöglicht. Unerwünschte Stoffwechselreaktionen unterbleiben. Dabei erweist es sich vor allem gegenüber der Bolzenschussmethode als ein wesentlicher Unterschied, dass eine hohe Energiedichte spezifisch appliziert wird. Die durch die Injektion des Einspritzmediums bewirkten Hirnläsionen fallen wesentlich ausgeprägter aus als bei einer Bolzenschussbetäubung. Die Zerstörungen sind derart ausgeprägt, dass innerhalb von Sekundenbruchteilen mit einer völligen Empfindungs- und Wahrnehmungslosigkeit gerechnet werden kann.

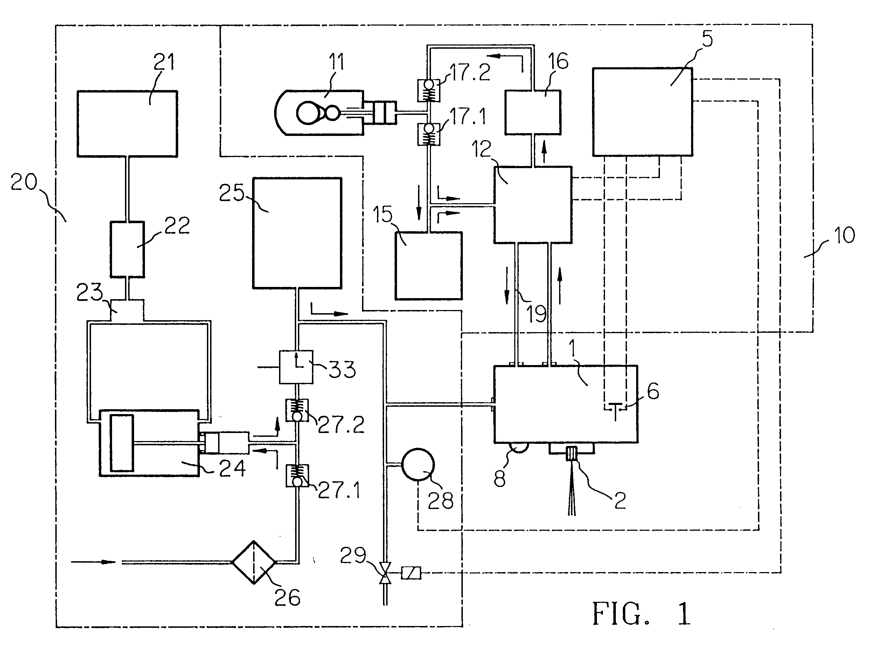

Figur 1 zeigt ein Prinzipschema eines Ausführungsbeispiels der Vorrichtung zur Durchführung des erfindungsgemässen Verfahrens. Ein Düsenkopf 1 mit einer Injektionsdüse 2 ist mit einem Versorgungsteil 20 verbunden. Der Düsenkopf 1 ist des weiteren mit einem Hydraulik- und Steuerteil 10 verbunden. Der Versorgungsteil 20 dient dem Aufbau und Speicherung des Drucks des verwendeten Einspritzmediums (Wasser). Dazu ist ein Kompressor 21 vorgesehen, der über einen Druckregler 22 und eine Druckluftsteuerung 23 eine Hubkolbenpumpe 24 betätigt. Die Hubkolbenpumpe dient dem Aufbau des Drucks in einem mit Wasser gefüllten Druckspeicher 25, welcher als Energiespeicher dient. Das Wasser wird über eine Wasserleitung und einen Filter 26 zugeführt. Mittels zwei Einwegventilen 27.1, 27.2 wird das Wasser in herkömmlicher Weise während einem Ansaugtakt in die Hubkolbenpumpe und während einem Arbeitstakt über Hochdruckleitungen dem Speicher 25 bzw. dem Düsenkopf 1 zugeleitet. In einer besonderen Ausführungsvariante ist in die Druckleitung ein zusätzliches Druckregelventil 33 geschaltet. Dieses ermöglicht es, den Druck für die Injektion vorzugeben. Im übrigen enthält der Versorgungsteil noch eine Drucküberwachungseinheit 28 und einen Ablasshahn 29, die mit der Steuereinheit 5 verbunden sind. Im Betrieb wird über diese Drucküberwachungseinheit28 der Druck überwacht.

Wegen der hohen Drücke, die zu steuern sind, erfolgt die Steuerung des Düsenkopfs 1 über mindestens ein Druckschaltventil, das bspw. durch eine Ölhydraulik betätigt wird. Da die Vorrichtung erfindungsgemäss sehr kurze Schaltzeiten bei hohen Drücken aufweisen muss, ist die Hydraulik entsprechend auszulegen. Der entsprechende Hydraulik- und Steuerteil 10 für diese Druckschaltventile enthält eine Ölpumpe 11 zum Aufbau des Drucks in einem Öldruckspeicher 15. Das Öl wird aus einem Ölspeicher 16 zugeführt, der in einen geschlossenen Ölkreislauf integriert ist. In die Ölleitung sind wiederum zwei Einwegventile 17.1, 17.2 geschaltet, die den Ansaug- und Arbeitstakt der Ölpumpe unterstützen. Eine (oder mehrere) Steuerleitung(en) 19 für das oder die Druckschaltventile wird durch eine elektrohydraulische Steuereinrichtung 12 betätigt. Der Schaltvorgang wird durch eine Steuereinheit 5 gesteuert. Die Steuereinheit 5 ist einerseits mit der elektrohydraulischen Steuereinrichtung 12 und andererseits mit dem Düsenkopf 1 verbunden. Die Steuereinrichtung 12 kann bspw. aus mindestens einem solenoidbetätigten Schaltventil bestehen, welches den Ölfluss durch die Steuerleitung 19 steuert. Vorzugsweise werden die Steuerleitungen möglichst kurz ausgelegt um eine hohe Dynamik der Einrichtung zu gewährleisten. In einer bevorzugten Ausführungsform wird deshalb die Steuereinrichtung 12 direkt im Düsenkopf 1 vorgesehen. Die Funktion dieses Schaltventils wird durch die Steuereinheit 5 gesteuert. Ein Sensor 8, der am Düsenkopf angebracht ist, liefert der Steuereinheit 5 ein "Freigabe"signal, sobald das sich das Tier mit dem Schädel in der Injektonsposition befindet. Ein mit der Steuereinheit verbundener Auslöseknopf 6 befindet sich am Düsenkopf 1.

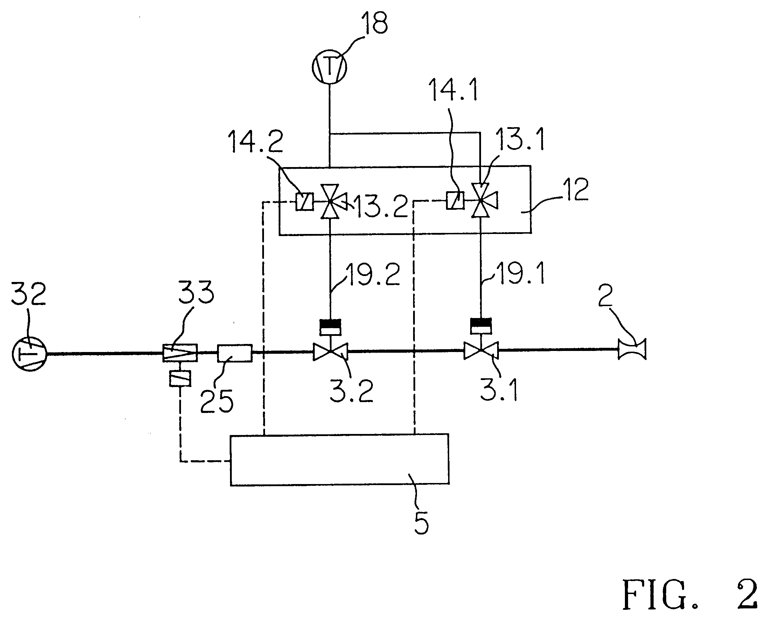

Figur 2 zeigt nun ausführlicher die Ansteuerung der Injektionsdüse 2 bzw. die Steuerung des Injektionsvorgangs mittels der Steuereinheit 5. Die Kreisläufe für das Öl und das Einspritzmedium sind nur schematisch angedeutet. Insbesondere ist der an sich geschlossene Ölkreislauf der Übersichtlichkeit hier nur teilweise eingezeichnet (Rückführungen wurden weggelassen). Die Druckquelle 18 für das Öl und die Druckquelle 32 für das Einspritzmedium sind schematisch angedeutet.

Die Injektionsdüse 2 wird während einer kurzen Zeitdauer $\Delta t$ aktiviert. Dies kann entweder durch ein schnellschaltendes Schaltventil erfolgen oder es werden vorzugsweise zwei Druckschaltventile 3.1, 3.2 in Serie geschaltet. Diesfalls enthält die elektrohydraulische Steuereinrichtung 12 zwei entsprechende Schaltventile (z.B. Dreiwegventile) 13.1 und 13.2 mit zwei Elektromagneten 14.1, 14.2. Zwei zugehörige Steuerleitungen 19.1, 19.2 werden den beiden Druckschaltventilen 3.1, 3.2 zugeführt. Beim Auslösen der Injektion ist das erste Ventil 3.1 geschlossen, das zweite Ventil 3.2 offen. Wird nun das erste Druckschaltventil 3.1 geöffnet und so die Injektion eingeleitet, so wird mit der entsprechenden zeitlichen Verzögerung $\Delta t$ das zweite Druckschaltventil 3.2 bereits wieder geschlossen. Dadurch wird erreicht, dass das Einspritzmedium während einer definierten Zeitdauer $\Delta t$ in einer definierten Menge eingespritzt wird.

Die Steuereinheit 5 dient der Vorgabe und Steuerung des Injektionsvorgangs. Gleichzeitig können durch diese Steuereinheit Sicherheitsmassnahmen vorgesehen werden bzw. der Injektionsvorgang überwacht werden. Durch eine herkömmliche elektronische Steuerung wird die Injektionsdauer eingestellt und durch entsprechende Impulse werden die solenoidgesteuerten Schaltventile 13.1, 13.2 der Ölhydraulik betätigt. Diese Schaltventile der elektrohydraulischen Steuereinrichtung 12 übernehmen die Öffnung bzw. Schliessung der Arbeitsleistung in den Steuerleitungen 19.1, 19.2, welche ihrerseits die Druckschaltventile 3.1, 3.2 betätigen. Die vorgeschlagene Kombination einer Elektrohydraulischen Steuerung des Injektionsprozesses trägt den geforderten Bedingungen (hohe Drücke, sehr kurze Schaltzeiten, hohe Repetitionsfrequenz) optimal Rechnung. Es versteht sich jedoch, dass der Erfindungsgedanke nicht durch dieses Ausführungsbeispiel eingeschränkt ist.

Vorzugsweise ist die Steuereinheit 5 auch mit dem Druckregelventil 33 verbunden, so dass über diese Steuereinheit je nach Bedarf der Arbeitsdruck für die Injektion vorgegeben werden kann.

Die Injektionszeit $\Delta t$ des Strahls wird so gesteuert, dass die Wirkdauer im Bereich von Millisekunden liegt. Bezüglich der Betäubungswirkung hat sich eine Einspritzzeit von $\Delta t = 50-100$ msec als gut erwiesen. Ausgedehnte Zerschneidungen werden durch höhere Steuerdrucke und damit kürzeren Injektionszeiten limitiert werden. Eine Verkürzung der Injektionszeit kann auch durch ein eine Kühlwirkung ausübendes Einspritzmedium erreicht werden.

Der Druck des Wasserstrahls beträgt ca. 3'500-4'000 bar. Selbstverständlich ist das Verfahren auch mit niederen oder höheren Drücken anwendbar. Jedoch ist bei tiefen Drücken die Betäubungswirkung (bei grösseren Schlachttieren, bspw. Schweine) nicht garantiert und bei höheren Betriebsdrücken können zu starke Zerstörungen des Schädels bewirkt werden. Von wesentlichem Einfluss ist auch der Durchmesser des Strahls, der vorzugsweise ca. 1-2 mm beträgt. Dementsprechend wird eine Düse mit einem Durchmesser von ca. 1-1,5 mm verwendet. Für kleine Schlachttiere wie Hühner werden Düsen mit kleinerem Durchmesser verwendet. Die Druckleitungen sind dem erforderlichen Austrittsdruck angepasst. Es muss darauf geachtet werden, dass die Druckspeicher genügend gross ausgelegt sind, um den Druck während der gesamten Injektionszeit $\Delta t$ konstant zu halten. Vorzugsweise wird für das Einspritzmedium ein Druckspeicher von mindestens 1'500 ml verwendet. Der Steuerdruck liegt vorzugsweise über 500 bar. Die Injektionsdüse wird beim Einspritzen entweder unmittelbar an den Schädel angesetzt oder im Abstand von einigen Zentimetern davon entfernt gehalten.

Die Injektionsdüse ist vorzugsweise auswechselbar. Der Einsatz von zwei oder mehr Injektionsdüsen, die gegeneinander leicht versetzt sind kann eine ebenfalls gute Wirkung gewährleisten. In einer besonderen Ausführung werden die Düsen gegeneinander unter einem Winkel, insbesondere windschief, angeordnet, so dass die Einspritzstrahlen innerhalb des Schädels verschieden verlaufen, so dass auch bei unpräzisem Ansatz des Düsenkopfes eine sichere Wirkung erzielt wird. Erzielt werden kann eine definerte Verwirbelung der Injektionsflüsse und damit der Hirnmasse. Es werden mit anderen Worten durch das Einschiessen des Einspritzmediums turbulente Bewegungen bzw. Druckwirkungen innerhalb des Schädels hervorgerufen, die durch die Anordnung der Düse(n) definiert sind. Eine zusätzliche Möglichkeit besteht darin, die Düse oder bei Einsatz mehrerer Düsen diese zeitlich versetzt auszulösen, d.h. zwei oder mehr Injektionsstösse erfolgen kurz hintereinander.

Um ein ungewolltes Auslösen des Injektionsvorgangs auszuschliessen, wird im Bereich der Injektionsdüse 2 ein oder mehrere Sensoren 8 vorgesehen. Diese Sensoren stellen fest, ob sich ein Gegenstand in der Nähe des Düsenkopfs 1 befinden und geben erst bei Detektion eines solchen ein Freigabesignal an die Steuereinheit 5 ab. Dadurch wird verhindert, dass mit der Einrichtung in den leeren Raum geschossen wird. Selbstverständlich können zusätzliche Sensoren den Injektionsvorgang nach anderen Kriterien überwachen.

Im folgenden soll der Injektionsvorgang kurz beschrieben werden. Vor dem eigentlichen Injizieren des Einspritzmediums wird vorzugsweise die Einspritzstelle und deren Umgebung gekühlt, bspw. durch Aufsetzen einer Kappe und Anwendung eines Kaltesprays. Ausserdem wird die Injektionszeit und der notwendige Arbeitsdruck eingestellt.

Als nächster Schritt wird der Düsenkopf 1 am Schädel, bspw. im Bereich der Medialen, angesetzt. Der Sensor 8 am Düsenkopf 1 oder zusätzliche Sensoren liefern ihre Messdaten der Steuereinheit 5. Je nach Einsatzbereich werden durch die Sensoren die Positionierung des Düsenkopfs, Erfüllen von Sicherheitsvorschriften, Zeitschranke vor einem zweiten Auslösen, etc. erfasst. Insbesondere bei der Automatisierung des Verfahrens ist dieser Aspekt von Bedeutung. Dadurch können die erforderlichen Sicherheitsmassnahmen getroffen werden um ein ungewolltes Betätigen der Einrichtung zu verhindern. Die Steuereinheit erlaubt in Abhängigkeit dieser durch die Sensoren gelieferten Daten ein Auslösen der Einrichtung nur unter den spezifisch vorgegebenen Bedingungen. Nachdem der Düsenkopf 1 richtig angesetzt ist, wird der Auslöseknopf 6 durch die Bedienungsperson oder in automatisierten Prozessen vollautomatisch betätigt. Der Auslösebefehl wird durch die Steuerelektronik 5 registriert. Sind die weiteren Bedingungen bzw. Steuerparameter (Sicherheitsbedingungen, korrekte Positionierung, Öldruckbreitschaft, etc.) erfüllt, so löst die Steuereinheit 5 die elektrohydraulische Steuerung und in der Folge den Injektionsstrahl mit vorgegebenem Druck für die gewählte Zeit Δt aus.

Wie bereits erwähnt wurde, können neben flüssigen Einspritzmedien auch (bei Raumtemperatur) gasförmige Stoffe in flüssigem oder auch in gasförmigem Aggregatzustand unter hohem Druck injiziert werden. Dies bringt den Vorteil mit sich, dass das injizierte Gas beim wärmeaufnehmenden Expandieren eine zusätzliche Kühlwirkung ausübt, so dass die Nervenbahnen durch Kältewirkung und z.T. durch lokale Druckwirkung "stillgelegt" werden und wenn dieser Effekt mit der Betäubungswirkung eines reinen Wasserstrahls kombiniert wird bspw. diesen sogar dominieren kann. Eine zusätzliche Möglichkeit besteht darin, Stoffgemische zu verwenden, das heisst beizumengen, die zusätzlich eine Desinfektionwirkung haben. Beispielsweise können folgende Gemische zur Anwendung kommen: Wasserstoff, Sauerstoff und Fluor; Wasserstoff und Sauerstoff und $SO_2$; $CO_2$ gasförmig; $N_2$ und Chlor oder wässrige Lösungen mit bakteriziden Stoffen die im Gasstrom versprüht werden. Ferner können Zusatzstoffe verwendet werden, die bspw. bei Wasser die Oberflächenspannung verringern, sodass das Treibmedium in eine Aerosolphase übertreten kann und der Wirkstrahl beim Auftreffen auf Gewebe gasförmig/flüssig ist. Die hohe kinetische Energie im Wirkstrahl erzeugt auch hohe Reibungskräfte im Umgebungsmaterial; thixotropierende Medien an sich (auch die Beimengung solcher) erlauben, mit geringerer kinetischer Energie und geringerer Reibung zu arbeiten, sodass die Zerstörung des Umgebungsgewebes sich verringern lässt. Solche Stoffe können einem liquiden Fluid nach Austritt aus der Druckdüse beigemengt werden, wobei auch gleichzeitig Gase als Zusatzfluid eingeführt werden können.

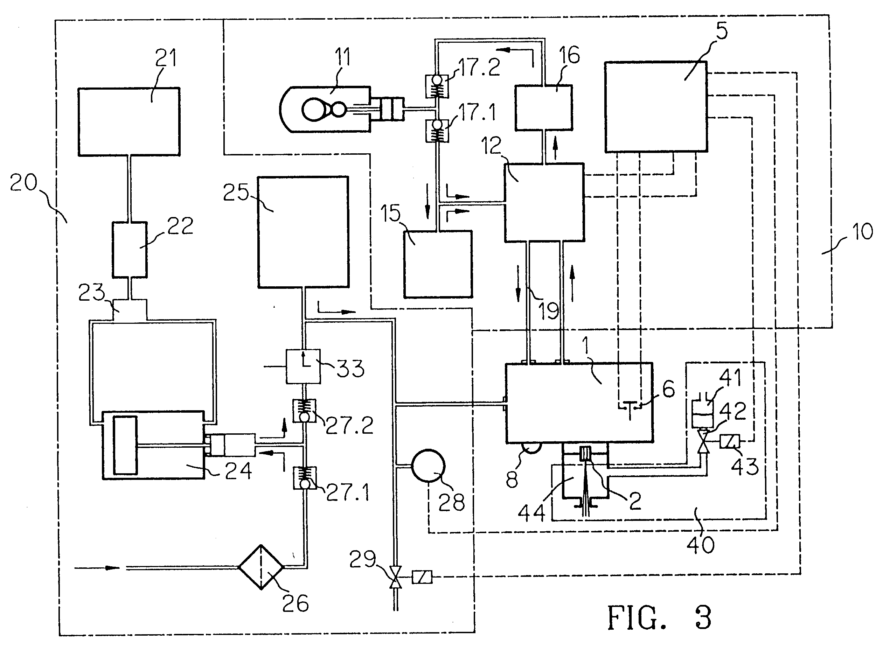

In Figur 3 ist eine für die Beimischung von zusätzlichen Stoffen, insbesondere von Gasen, geeignete Ausführungsvariante der Vorrichtung gemäss Figur 1 schematisch dargestellt. Eine Beimisch- oder Dosiereinrichtung 40 ist mit dem Düsenkopf 2 verbunden oder in diesen integriert. Ein Stoffspeicher 41 enthält eine Flüssigkeit (Flüssigkeitsgemisch) oder ein Gas (Gasgemisch). Der durch die Injektionsdüse 1 in einer Mischkammer 44 bewirkte Unterdruck führt dazu, dass bei Öffnen eines Kontrollventils 42 die Flüssigkeit oder das Gas aus dem Stoffspeicher 41 durch den Injektionsstrahl mitgerissen wird. Das Kontrollventil 42 wird bspw. durch einen mit der Steuereinheit 5 verbundenen Elektromagneten 43 angesteuert.

Die Beimischung eines Zusatz-Stoffes aus dem Stoffspeicher 41 in das Einspritzmedium bietet verschiedene Möglichkeiten. In einer ersten Anwendung des erfindungsgemässen Verfahrens wird einem flüssigen Einspritzmedium (bspw. Wasser) eine zusätzliche Flüssigkeit oder ein Gas (bspw. mit desinfizierender Wirkung) beigemischt. Eine andere Anwendungsvariante sieht vor, dass einem gasförmigen Einspritzmedium eine Flüssigkeit, also ein flüssiges Zusatzmedium beigemischt wird. Die in der Mischkammer erfolgende Zerstäubungswirkung auf die Flüssigkeit bewirkt, dass kleinste, mitgerissene Flüssigkeitstropfen durch ihre kinetische Energie (die höher ist, als die eines beschleunigten Gasmoleküls) die Eindringwirkung des Gasstrahles unterstützen. Weist die beigemengte Flüssigkeit einen so niederen Siedepunkt auf, dass sie bei Körpertemperatur gasförmig ist, so kommt die Kühl- und Expansionswirkung am Zielort, hier die Nerven, noch dazu, sodass die Betäubungswirkung praktisch unmittelbar ist.

Fluide Zusatzstoffe, wie oben diskutiert, können, falls dies gewünscht ist, die Lokalisierung der Wirkung verbessern. Die Defokussierung des Wirkstrahles geschieht hauptsächlich nach dem Auftreffen auf weiches Gewebe (und nicht auf hartes). Somit bieten Zusatzstoffe, welche die Molekülreibung bei grosser Scherung herabsetzen, das sind thixotrop viskose Stoffe, die Möglichkeit, die Durchdringwirkung durch weiches Gewebe zu verbessern, sodass eine geringere Defokussierung des Wirkstrahles lange vor seiner Zielregion verringert wird. Diesbezüglich unterscheidet sich die Massnahme klar vom lediglichen Durchdringenmüssen von harten Materialien, hier wären es die Knochen der Schädeldecke, vom spezifischen Durchdringenmüssen von weichen Materialien, hier wäre es unter anderem die Kopfschwarte. Eine stärkere Defokussierung des Wirkstrahles in der Region der Kopfschwarte führt zu einer flächigeren Zerstörung der Schädeldecke, als es bei einer geringeren Defokussierung der Fall wäre. Bei einer flächigeren Einwirkung ist auch die Druckwelle im Gehirn entsprechend stärker. Hier führen Zusatzmedien oder Medien tel quel zum jeweiligen Ziel, entweder einer solchen Defokussierung entgegenwirken oder eine solche zu unterstützen.

## Patentansprüche

1. Verfahren zum Betäuben von Schlachttieren durch Injizieren eines Fluids in den Schädel des Schlachttieres, **dadurch gekennzeichnet**, dass zur Injizierung ein scharf gebündelter, impulsförmiger Fluidstrahl gebildet und so beschleunigt wird, dass mit diesem Fluidstrahl eine Injektionsöffnung im Schädel gebildet wird, wobei der eindringende Fluidstrahl defokussiert wird und mit seiner kinetischen Restenergie eine grossräumige Zerstörung des Gehirns bewirkt.

2. Verfahren zum Betäuben von Schlachttieren nach Anspruch 1, **dadurch gekennzeichnet**, dass das Fluid in flüssigem Aggregatzustand injiziert wird.

3. Verfahren zum Betäuben von Schlachttieren nach Anspruch 1, **dadurch gekennzeichnet**, dass das Fluid in gasförmigem Aggregatzustand injiziert wird.

4. Verfahren zum Betäuben von Schlachttieren nach Anspruch 1 oder 2, **dadurch gekennzeichnet**, dass ein bei Zimmertemperatur gasförmiges Fluid verwendet wird.

5. Verfahren zum Betäuben von Schlachttieren nach einem der vorstehenden Ansprüche, **dadurch gekennzeichnet**, dass das Einspritzmedium unter einem Druck von 3'000-4'000 bar injiziert wird.

6. Verfahren zum Betäuben von Schlachttieren nach einem der vorstehenden Ansprüche, **dadurch gekennzeichnet**, dass das Einspritzmedium während einer kurzen Injektionszeit von $\Delta t = 10$-$200$ msec eingespritzt wird.

7. Verfahren zum Betäuben von Schlachttieren nach einem der vorstehenden Ansprüche, **dadurch gekennzeichnet**, dass zwei Injektionen um eine kurze Zeit versetzt vorgenommen werden.

8. Verfahren zum Betäuben von Schlachttieren nach einem der vorstehenden Ansprüche, **dadurch gekennzeichnet**, dass mindestens zwei Injektionsstrahlen gegenseitig versetzt injiziert werden um eine Verwirbelung innerhalb des Schädels herbeizuführen.

9. Verfahren zum Betäuben von Schlachttieren nach einem der vorstehenden Ansprüche, **dadurch gekennzeichnet**, dass die Auslösung der Injektion erst freigegeben wird, nachdem vorgebbare Steuerparameter erfüllt sind.

10. Verfahren zum Betäuben von Schlachttieren nach einem der vorstehenden Ansprüche, **dadurch gekennzeichnet**, dass dem aus einer Injektionsdüse austretenden Strahl des Einspritzmediums ein zusätzliches gasförmiges oder flüssiges Medium beigemischt wird.

11. Verfahren nach einem der vorstehenden Ansprüche, **dadurch gekennzeichnet**, dass das Einspritzmedium und/oder das beigemischte Medium thixotrop viskose Eigenschaften aufweist.

12. Verfahren nach einem der vorstehenden Ansprüche, **dadurch gekennzeichnet**, dass das Einspritzmedium und/oder das beigemischte Medium desinfizierende Eigenschaften aufweist.

13. Vorrichtung zur Durchführung eines Betäubungsverfahrens gemäss Anspruch 1, **gekennzeichnet durch**, einen Druckspeicher (25) für ein Fluid, der über Steuermittel (5, 12, 3.1, 3.2) mit einer, auf einen Schädel eines Schlachttieres, ausrichtbaren Injektionsdüse (2) verbunden ist, die zur Formung eines scharf gebündelten, impulsförmigen Fluidstrahles, ausgebildet ist, sowie durch einen im Bereiche der Injektionsdüse angeordneten Sensor (8), zur Messung u.a. des Abstandes zum angezielten Schädel, der mit Steuermitteln (5) verbunden ist und zur Übermittlung von Messdaten an die Steuermittel (5) ausgebildet ist.

14. Vorrichtung nach Anspruch 13, **dadurch gekennzeichnet**, dass der Druckspeicher mindestens ein Volumen von 1'500 ml aufweist.

15. Vorrichtung nach Anspurch 13, **dadurch gekennzeichnet**, dass als Steuermittel Druckschaltventile (3.1, 3.2), in Serie geschaltet, vorgesehen sind.

16. Vorrichtung nach Anspruch 15, **dadurch gekennzeichnet**, dass die Druckschaltventile (3.1, 3.2) durch eine Ölhydraulik (11, 15, 16, 17, 19) betätigt werden.

17. Vorrichtung nach Anspruch 13, **dadurch gekennzeichnet**, dass die Injektionsdüse durch ein Schnellschaltventil gesteuert ist.

18. Vorrichtung nach Anspruch 16 oder 17, **dadurch gekennzeichnet**, dass das oder die Schaltventile einen Arbeitsdruck von 3'000-4'000 bar aufweisen.

19. Vorrichtung nach einem der Ansprüche 13 bis 18, **dadurch gekennzeichnet**, dass mehrere Injektionsdüsen (2) an einem Düsenkopf (1) angeordnet sind.

20. Vorrichtung nach Anspruch 19, **dadurch gekennzeichnet**, dass die Injektionsdüsen (2) unter einem gegenseitigen Winkel angeordnet sind.

21. Vorrichtung nach einem der Ansprüche 13 bis 20, **dadurch gekennzeichnet**, dass der Injektionsdüse (2) ein Druckregelventil (33) vorgeschaltet ist.

22. Vorrichtung nach einem der Ansprüche 13 bis 21, **dadurch gekennzeichnet**, dass die Injektionsdüse einen Durchmesser von 1-1,5 mm aufweist.

23. Vorrichtung nach einem der Ansprüche 13 bis 22, **dadurch gekennzeichnet**, dass eine Steuereinrichtung (12) für die Ansteuerung der Injektionsdüse(n) (2) in den Düsenkopf (1) integriert ist.

24. Vorrichtung nach einem der Ansprüche 13 bis 23, **dadurch gekennzeichnet**, dass der Injektionsdüse (2) eine Mischkammer (44) vorgeschaltet ist, die mit einer Beimisch- oder Dosiereinrichtung (40) verbunden ist.

25. Verfahren nach Anspruch 1, **dadurch gekennzeichnet**, dass dem Fluidstrahl kinetische Energie im Verhältnis zur Masse des Schädels des Schlachttieres vermittelt wird.

**Claims**

1. Method for stunning animals for slaughter by injecting a fluid into the skull of the animal, characterized in that for injection purposes a sharply focussed, pulse-like fluid jet is formed and accelerated in such a way that with said fluid jet an injection opening is formed in the skull, the penetrating fluid jet being defocussed and bringing about with its residual kinetic energy a large-area destruction of the brain.

2. Method for stunning animals for slaughter according to claim 1, characterized in that the fluid is injected in the liquid aggregate state.

3. Method for stunning animals for slaughter according to claim 1, characterized in that the fluid is injected in the gaseous aggregate state.

4. Method for stunning animals for slaughter according to claims 1 or 2, characterized in that a fluid gaseous at room temperature is used.

5. Method for stunning animals for slaughter according to any one of the preceding claims, characterized in that the injection medium is injected under a pressure of 3000 to 4000 bar.

6. Method for stunning animals for slaughter according to any one of the preceding claims, characterized in that the injection medium is injected for a short injection time of $\Delta t$ = 10-200 msec.

7. Method for stunning animals for slaughter according to any one of the preceding claims, characterized in that two injections are carried out with a short time interval between them.

8. Method for stunning animals for slaughter according to any one of the preceding claims, characterized in that at least two injection jets are injected in reciprocally displaced form so as to bring about a whirling up or turbulence within the skull.

9. Method for stunning animals for slaughter according to any one of the preceding claims, characterized in that the initiation of injection is only triggered when predeterminable control parameters have been fulfilled.

10. Method for stunning animals for slaughter according to any one of the preceding claims, characterized in that the injection medium jet passing out of an injection nozzle additionally has gaseous or liquid medium admixed with it.

11. Method according to any one of the preceding claims, characterized in that the injection medium and/or the admixed medium have thixotropic, viscous characteristics.

12. Method according to any one of the preceding claims, characterized in that the injection medium and/or the admixed medium have disinfecting properties.

13. Apparatus for performing a stunning method according to claim 1, characterized by a pressure storage device (25) for a fluid connected by means of control means (5, 12, 3.1, 3.2) to an injection nozzle (2) which can be oriented onto the skull of an animal for slaughter and constructed for forming a sharply focussed, pulse-like fluid jet, as well as by a sensor (8) located in the vicinity of the injection nozzle for measuring inter alia the distance from the skull aimed at and which is connected to control means (5) and constructed for supplying measured data to the control means (5).

14. Apparatus according to claim 13, characterized in that the pressure storage device at least has a volume of 1500 ml.

15. Apparatus according to claim 13, characterized in that as control means pressure switching valves (3.1, 3.2) are provided, which are connected in series.

16. Apparatus according to claim 15, characterized in that the pressure switching valves (3.1, 3.2) are operated by an oil hydraulic means (11, 15, 16, 17, 19).

17. Apparatus according to claim 13, characterized in that the injection nozzle is controlled by a rapid switching valve.

18. Apparatus according to claim 16 or 17, characterized in that the switching valve or valves have an operating pressure of 3000 to 4000 bar.

19. Apparatus according to any one of the claims 13 to 18, characterized in that there are several injection nozzles (2) on one nozzle head (1).

20. Apparatus according to claim 19, characterized in that the injection nozzles (2) are arranged under a reciprocal angle.

21. Apparatus according to any one of the claims 13 to 20, characterized in that a pressure regulating valve (33) is connected upstream of the injection nozzle (2).

22. Apparatus according to any one of the claims 13 to 21, characterized in that the injection nozzle has a diameter of 1 to 1.5 mm.

23. Apparatus according to any one of the claims 13 to 22, characterized in that a control device (12) for controlling the injection nozzle or nozzles (2) is integrated into the nozzle head (1).

24. Apparatus according to any one of the claims 13 to 23, characterized in that a mixing chamber (44), connected to an admixing or dosing device (40), is connected upstream of the injection nozzle (2).

25. Method according to claim 1, characterized in that the fluid jet is supplied with kinetic energy in relation to the mass of the skull of the animal to be slaughtered.

**Revendications**

1. Procédé pour assommer des animaux à abattre par injection d'un fluide dans le crâne de l'animal à abattre, caractérisé en ce qu'un jet de fluide impulsionnel très concentré est accéléré de manière à pouvoir aménager une ouverture dans le crâne, le jet de fluide injecté de cette manière étant défocalisé à l'intérieur du crâne, détruisant ainsi une grande partie du cerveau par son énergie cinétique résiduelle.

**2.** Procédé pour assommer des animaux à abattre selon la revendication 1, caractérisé en ce que le fluide est injecté en phase liquide.

**3.** Procédé pour assommer des animaux à abattre selon la revendication 1, caractérisé en ce que le fluide est injecté en phase gazeuse.

**4.** Procédé pour assommer des animaux à abattre selon la revendication 1 ou 2, caractérisé en ce que le fluide utilisé est en phase gazeuse à température ambiante.

**5.** Procédé pour assommer des animaux à abattre selon l'une quelconque des revendications précédentes, caractérisé en ce que le fluide est injecté à une pression comprise entre 3 000 et 4 000 bars.

**6.** Procédé pour assommer des animaux à abattre selon l'une quelconque des revendications précédentes, caractérisé en ce que le fluide est injecté pendant une période d'injection réduite $\Delta t$ = 10 à 200 millisecondes.

**7.** Procédé pour assommer des animaux à abattre selon l'une quelconque des revendications précédentes, caractérisé en ce que deux injections sont effectuées avec un décalage temporaire.

**8.** Procédé pour assommer des animaux à abattre selon l'une quelconque des revendications précédentes, caractérisé en ce qu'au moins deux jets de fluide sont injectés de manière décalée pour produire une fluidisation à l'intérieur du crâne.

**9.** Procédé pour assommer des animaux à abattre selon l'une quelconque des revendications précédentes, caractérisé en ce que l'injection n'est déclenchée qu'après satisfaction d'un certain nombre de paramètres de commande programmés au préalable.

**10.** Procédé pour assommer des animaux à abattre selon l'une quelconque des revendications précédentes, caractérisé en ce que le jet du fluide sortant de la buse d'injection est mélangé avec un fluide complémentaire en phase gazeuse ou liquide.

**11.** Procédé pour assommer des animaux à abattre selon l'une quelconque des revendications précédentes, caractérisé en ce que le fluide d'injection et/ou le fluide complémentaire présente des caractéristiques viscothixotropes.

**12.** Procédé pour assommer des animaux à abattre selon l'une quelconque des revendications précédentes, caractérisé en ce que le fluide d'injection et/ou le fluide complémentaire présente des caractéristiques désinfectantes.

**13.** Dispositif d'application d'un procédé pour assommer des animaux à abattre conformément à la revendication 1, caractérisé par un accumulateur (25) du fluide pressurisé, cet accumulateur étant relié, par des moyens de commande (5, 12, 3.1, 3.2), avec une buse d'injection (2) pouvant être orientée sur le crâne d'un animal à abattre et conçue pour former un jet de fluide impulsionnel très concentré, ainsi que par un capteur (8) disposé dans la zone de la buse d'injection pour mesurer, entre autres, l'écartement par rapport au crâne visé, ledit capteur étant relié à des moyens de commande (5) et conçu pour transmettre des données de mesure à ces moyens de commande (5).

**14.** Dispositif selon la revendication 13, caractérisé en ce que l'accumulateur présente un volume d'au moins 1 500 ml.

**15.** Dispositif selon la revendication 13, caractérisé en ce que le moyen de commande consiste en un certain nombre de vannes manométriques (3.1, 3.2) montées en série.

**16.** Dispositif selon la revendication 15, caractérisé en ce que les vannes manométriques (3.1, 3.2) sont déclenchées par un système hydraulique (11, 15, 16, 17, 19).

**17.** Dispositif selon la revendication 13, caractérisé en ce que la buse d'injection est commandée par une vanne à commutation rapide.

**18.** Dispositif selon la revendication 16 ou 17, caractérisé en ce que la ou les vannes de commutation présentent une pression de travail comprise entre 3 000 et 4 000 bars.

**19.** Dispositif selon l'une quelconque des revendications 13 à 18, caractérisé en ce que plusieurs buses d'injection (2) sont disposées sur une tête à buses (1).

**20.** Dispositif selon la revendication 19, caractérisé en ce que les buses d'injection (2) sont disposées à un angle donné les unes par rapport aux autres.

**21.** Dispositif selon l'une quelconque des revendications 13 à 20, caractérisé en ce qu'une vanne manométrique (33) est montée en amont de la buse d'injection (2).

22. Dispositif selon l'une quelconque des revendications 13 à 21, caractérisé en ce que la buse d'injection présente un diamètre compris entre 1 et 1,5 mm.

23. Dispositif selon l'une quelconque des revendications 13 à 22, caractérisé en ce qu'un dispositif de commande (12) est intégré pour asservir la (les) buse(s) d'injection (2) dans la tête à buses (1).

24. Dispositif selon l'une quelconque des revendications 13 à 23, caractérisé en ce qu'une chambre de mélange (44) est montée en amont de la buse d'injection (2), ladite chambre étant reliée à un système de mélange ou de dosage (40).

25. Procédé selon la revendication 1, caractérisé en ce que le jet de fluide est accéléré par une énergie cinétique rajoutée en proportion de la masse du crâne de l'animal à abattre.

FIG. 1

FIG. 2

EP 0 422 312 B1

FIG. 3